# EUROPEAN PATENT APPLICATION

(11) **EP 2 506 195 A1**
(43) Date of publication of application: **03.10.2012**
(21) Application number: 11002764.6
(22) Date of filing: 01.04.2011
(51) Int. Cl.: G06Q 10/00

(54) **Signature methods for scientific data information systems**

(71) Applicant: Waters Technologies Corporation, Milford, MA 01757 (US)
(72) Inventor: Richter, Thorsten, 55218 Ingelheim am Rhein (DE); Wintergalen, Andreas, Dr., 50529 Pulheim (DE)
(74) Representative: Vossius, Corinna

(57) **Abstract**

A computer-implemented method that includes providing an authorized user with an option to define one more levels of a signature method, and providing the authorized user with an option to assign at least one user whose signature is required for each of the defined levels.

## Description

### TECHNICAL FIELD

This disclosure relates to scientific data information systems, and in particular to signature methods for scientific data information systems.

### BACKGROUND

The U.S. Food and Drug Administration's (FDA's) 21 CFR part 11 Electronic Records rule requires business organizations to be able to generate accurate and complete copies of records in both human readable and electronic format suitable for inspection, review, and copying by the agency (21 CFR 211.180(c), 21 CFR 58.195, 21 CFR 820.180, 40 CFR 3.3, 40 CFR 160.195 and part 11.10 (b)). Included in these requirements is the need for reliable controls for attaching electronic signatures to electronic documents.

In some cases multiple electronic signatures have to be applied before the document can be qualified as signed. Typically an organization might employ a 'Review' step, where multiple signatures are required before the document can move to the 'Approve' step, where again multiple signatures are required before the document can move to final 'Sign-off'. This series of steps is referred to as a signature sequence. (This is a requirement of GMPS and GLPs 21 CFR 211.100, .160, .186, .194, 21 CFR 820.40 (a&b), and 21 CFR 58.185 (12), 40 CFR 160.185(12)).

### SUMMARY

In one aspect, the invention provides a computer-implemented method that includes providing an authorized user with an option to define one more levels of a signature method, and providing the authorized user with an option to assign at least one user whose signature is required for each of the defined levels.

Implementations may include one or more of the following features.

In some implementations, providing the authorized user with the option to define one or more levels includes displaying the option to define one or more levels in a graphical user interface.

In certain implementations, providing the authorized user with the option to assign at least one user whose signature is required for each of the defined levels includes displaying the option to assign at least one user whose signature is required for each of the defined levels in a graphical user interface.

Displaying the option to assign at least one user whose signature is required for each of the defined levels can include displaying a list of available users.

In some cases, the list of available users includes only users with permission to apply electronic signatures.

In some implementations, the authorized user is provided with an option to assign at least one reason, from a list of predefined reasons, to each of an approved signature action and a rejected signature action.

In certain implementations, the authorized user is provided with an option to activate notification settings based on due dates, wherein the notification settings trigger an automated distribution of notification to selected users when a due date for signature is near or is reached.

Providing the authorized user with the option to activate notification settings based on due dates can include displaying the option to activate notification settings based on due dates in a graphical user interface.

In some implementation, the authorized user is provided with an option to activate notification settings for the overall signature method, wherein the notification settings trigger an automated distribution of notification to selected users when a report is completely signed.

In certain implementations, the authorized user is provided with an option to activate notification settings for the overall signature method, wherein the notification settings trigger an automated distribution of notification to selected users when one of the selected users rejects a report.

In some implementations, an end user is provided with an option to assign the signature method to an other method (e.g., an analysis method or a capture method).

Other aspects, features, and advantages are in the description, drawings, and claims.

### BRIEF DESCRIPTION OF THE DRAWINGS

FIG. 1 is a schematic view of a scientific data information system.
FIG. 2 is a schematic view of a workstation model including the scientific data information system of FIG. 1.
FIG. 3 is a computer network including the scientific data information system of FIG. 1.
FIG. 4 is a screen shot illustrating a graphical user interface of the scientific data information system of FIG. 1
FIG. 5-7 are detailed views of an Assignment area from the graphical user interface of FIG. 4.
FIG. 8 is a detailed view of a Signature Method Settings pane from the graphical user interface.
FIG. 9 is a screen shot illustrating a signature method selection plug-in list.

Like reference numbers indicate like elements.

### DETAILED DESCRIPTION

Within a scientific data information system, a signature service can be provided that can be used to define, manage, and monitor signature methods.

### I. System Overview

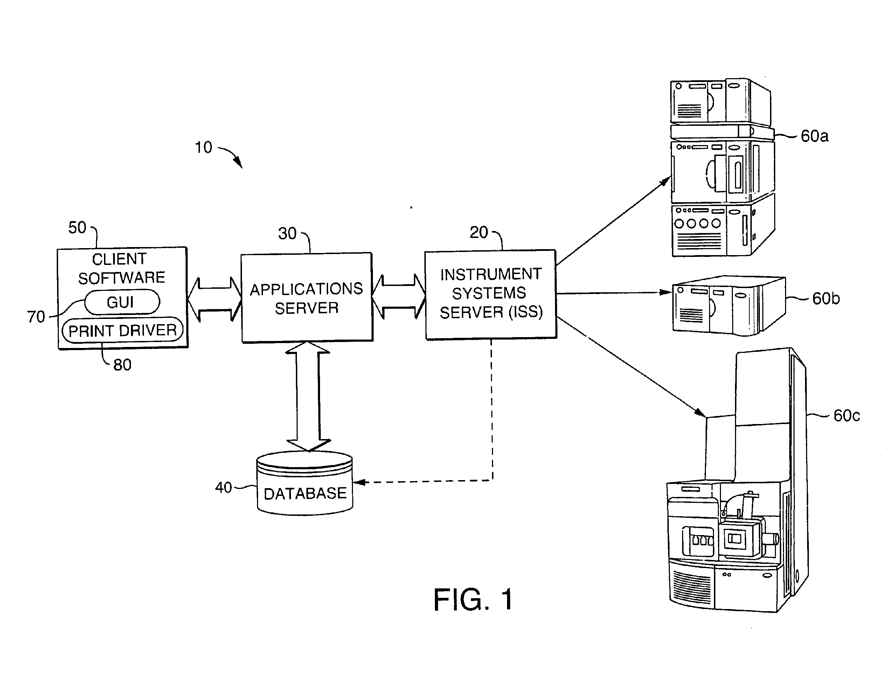

FIG. 1 illustrates a scientific data information system 10 that provides for acquisition of chromatography and mass spectrometry data (within a single software environment), instrument control, data processing and mining, and reporting, with GxP laboratory compatibility that allows for deployment throughout a science-driven organization. The scientific data information system includes an instrument systems server (ISS) 20, an application server 30, a database 40, and client software 50.

The ISS 20 is in communication with laboratory instruments 60a-c and includes computer-executable instructions for handling instrument control and data acquisition. The laboratory instruments 60a-c can include, for example, chromatographic instruments 60a, detectors 60b (e.g., UV detectors), and mass spectrometers 60c. Exemplary chromatographic instruments include ACQUITY UPLC® H-Class Bio System, available from Waters Corporation of Milford, Massachusetts. Exemplary detectors include the ACQUITY UPLC® Tunable UV (TUV) Detector, available from Waters Corporation. Exemplary mass spectrometers include the Xevo® G2 Tof mass spectrometer, available from Waters Corporation.

Generally, the ISS 20 performs two functions (i) system coordination, and (ii) data buffering. The ISS 20 can coordinate operation of the instruments based on information (e.g., instrument method and sample set information) received from the application server 30, which allows the ISS 20 to set up the instruments and start an acquisition. Instrument methods include instructions for controlling operating parameters of one of an attached instrument. The ISS 20 also provides status information back to the application server 30 during a run.

During data acquisition, the acquired data (e.g., chromatographic and/or mass spectrometry (MS) data) is received by the ISS 20 from the laboratory instruments 60a-c in native instrument format. The data is then translated by the ISS 20 to unified datafile format. Converted data is stored by the ISS 20 in a secure file buffer, and a rolling SHA 1 checksum, incremented with each data packet, ensures fidelity and security of data. A final checksum is calculated upon acquisition completion and the raw data file is delivered to the database 40 where it is stored and locked.

The application server 30 is in communication with the ISS 20, the database 40, and the client software 50. The application server 30 handles the business logic (i.e., the functions that the associated software performs on the data). The application server 30 retrieves data (from the database 40), processes and presents data to a graphical user interface 70, processes input data (e.g., from the graphical user interface 70), and sends method (e.g., instrument method) and sample set information to the ISS 20 to set up the instruments and start an acquisition. In addition, the application server 30 and the ISS 20 communicate on a host of configuration and setup issues, such as downloading instrument drivers to the ISS 20, configuring instrument systems, etc. This is driven from the application server 30 to the ISS 20.

The application server 30 includes computer-executable instructions for providing administrative and information access controls, as well as for providing audit trails of user activities and record alterations in accordance with GxP compliance requirements. Each unique user has tunable information access (method, data, results, etc.) limitations and activity restrictions dictated by their assigned roles. Users can include administrators, managers, analysts, and principal scientists.

The application server 30 also includes computer-executable instructions for performing data processing, e.g., to reduce the raw data acquired from the laboratory instruments 60a-c into usable reports. Data (e.g., chromatographic data, spectral (MS) data, and bioinformatics) can be processed, by the application server 30, while acquisition is ongoing if processing parameters are specified within a method (e.g., an analysis method). Analysis methods can describe expected system hardware configurations, separation and MS parameters, spectral processing and bioinformatics analysis tasks, and links to automated reporting templates, which can be used to automate production of standardized reports. Following data collection, a copy of the corresponding analysis method can be stored as part of each results set. The application server 30 also relays information, e.g., method and sample set information, to the ISS 20, which then controls the instruments 60a-c according to the information provided.

The database 40 is a relational database. Relational databases enable real-time acquisition, processing, and management of large volumes of data from multiple sources. This can allow for simultaneous processing, review, and acquisition of data and parallel data acquisition from multiple instrument systems. Suitable relational databases include the Oracle® 11gR2 relational database, available from Oracle Corporation of Redwood Shores, California. Information stored in the database 40 can include many different data types (e.g., analyses, raw data, reports, historical data, methods, etc.) which may be stored in a unified data structure (also referred to as a "Content Item"). The use of a unified data structure can help to enable all laboratory functions to work with a common backbone of analytical information. This data standardization can also help to increase the exchange of information within an organization (e.g., between product development and product manufacturing), and, in some cases, even globally (e.g., with third-party partners).

The client software 50 includes computer-executable instructions (e.g., a Windows Presentation Foundation (or WPF) piece of code) for providing the graphical user interface 70 which displays data and allows the user to interact with the data (via the application server 30). Users can use the graphical user interface to select/define methods (e.g., instrument methods, analysis methods, capture methods, signature methods), to process data, and electronically review and sign reports. When the user decides to process data, instructions are sent the application server 30, where the processing takes place.

The client software 50 also includes a print driver 80 for performing print capture. The software generates a print file and moves the file through the application server 30 and stores it on the database 40. The print capture feature can be used for brining in auxiliary information into the system.

These software components (also known as computer programs, programs, software, software applications or code) include machine instructions for a programmable processor. As used herein, the terms machine-readable medium and computer-readable medium refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term machine-readable signal refers to any signal used to provide machine instructions and/or data to a programmable processor.

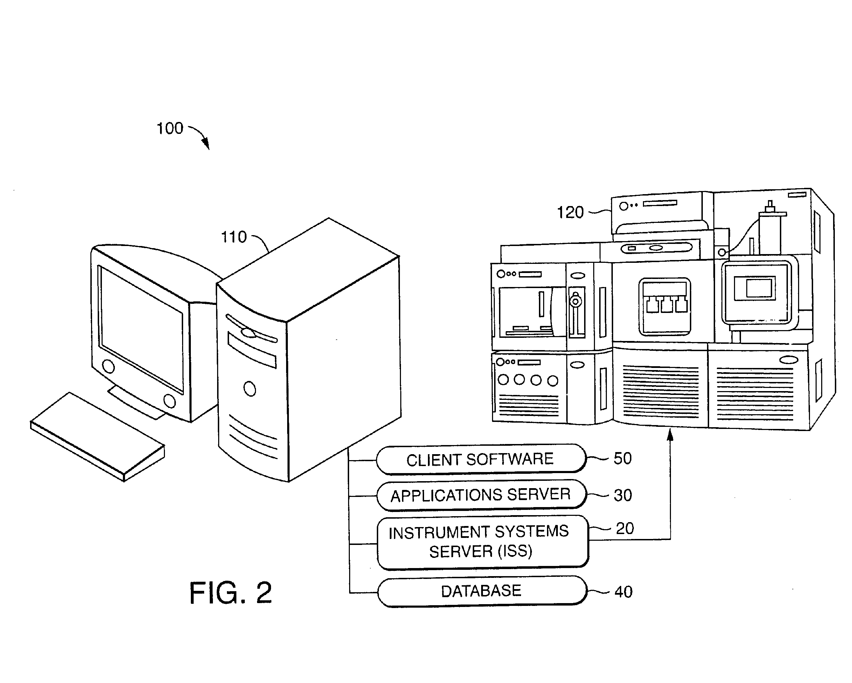

The scientific data information system 10 can be implemented in a variety of configurations, from an individual workstation model, to a network model, such as a laboratory-based workgroup or networked enterprise environment. In a workstation model, one computer handles both the low-level (e.g., database management and instrument control) and high level (e.g., data processing and user interface) functions. For example, FIG. 2 illustrates a workstation 100 in which the client software 50, the application server 30, the ISS 20, and the database 40 all reside on a single computer 110. A suitable computer 110 for the workstation 100 is a Lenovo D20 Workstation configured with dual Xeon E5504 2.0 GHz processors, 8 GB RAM, Nvidia Quadro FX 18000 graphics card under the Windows 7 64-bit operating system. The workstation 100 can also include a key board and a pointing device (e.g., a mouse or a trackball) for receiving user input, and a display device for displaying the graphical user interface 70. The workstation 100 can be physically located next to a laboratory instrument 120, such as a liquid chromatography (LC)/mass spectrometry (MS) system.

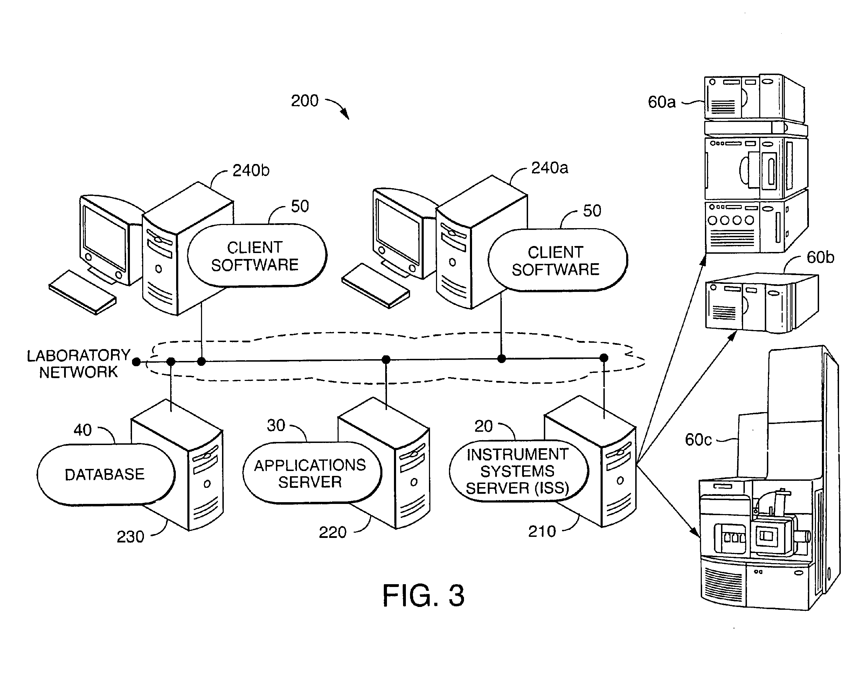

In a network model, the user interface, data processing, database management and instrument control functions can be split across separate computers which may be connected over a computer network, e.g., such as a local area network (LAN), wide area network (WAN), the Internet, or a combination thereof. For example, FIG. 3 illustrates a network 200 that includes an information system computer 210, an application server computer 220, a database management computer 230 and one or more client PC's 240a, 240b on which the ISS 20, the application server 30, the database 40, and the client software 50 reside, respectively. In some cases, such as in a laboratory-based workgroup, the application server and the database may reside on a common computer.

Each of the network computers can include a processor for processing instructions (e.g., stored in memory or on a storage device) for execution within the corresponding computer; a memory (e.g., volatile memory, non-volatile memory, a magnetic disk, an optical disk, etc.) for storing information within the corresponding computer; and a storage device (e.g., a floppy disk device, a hard disk device, an optical disk device, or a tape device, a flash memory, etc.) for providing mass storage for the corresponding computer.

### II. Signature Methods

The scientific data information system 10 can include a signature service. The signature service can consist of software that allows users to define, manage, and monitor signature methods. The signature methods can specify report approval workflows in a manner compliant-ready, e.g., with 21 CFR part 11 electronic signature standards. The signature service may, for example, be included as part of the software of the applications server 20. Each defined signature method can exist as an independent entity that can be reused and assigned to other methods (e.g., analysis methods, capture methods, etc.) to help ensure that the resulting reports will be signed based on the assigned signature method. In some cases, a defined signature method can be applied to content items and is not restricted to reports.

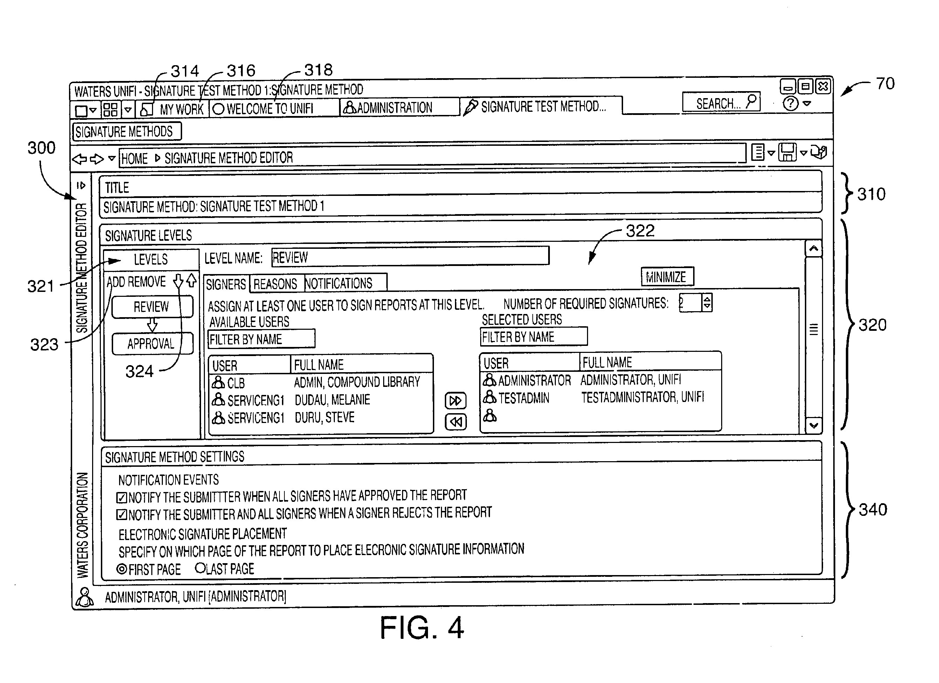

Users can access the signature service via the graphical user interface 70. Users can interact with the graphical user interface 70 via a pointing device. FIG. 4 illustrates a Signature Method Editor page 300 of the graphical user interface 70, which allows users setup and define signature methods. The Signature Method Editor page 300 includes a Title pane 310, a Signature Levels pane 320, and a Signature Method Settings pane 340.

The Title pane 310 displays a user defined name ("Signature Test Method 1," in the example of FIG. 4) of a signature method being edited.

The Signal Levels pane 320 includes a Levels area 321 and an Assignment area 322. The Levels area 322 includes virtual buttons 323 for adding and removing levels to a signature method, and virtual buttons 324 for changing the order of defined levels. An authorized user (e.g., an administrator) can set up different levels for a signature method to ensure that a required signature sequence is followed. In the example illustrated in FIG. 4, two levels "Review," and "Approval" have been added. The authorized user can set up as many levels as required and can apply a user defined name to each level

For each defined level, the authorized user can assign one or more end users whose signature is required. All required signatures for a given level must be applied before the persons who are assigned to the following level can apply their signatures.

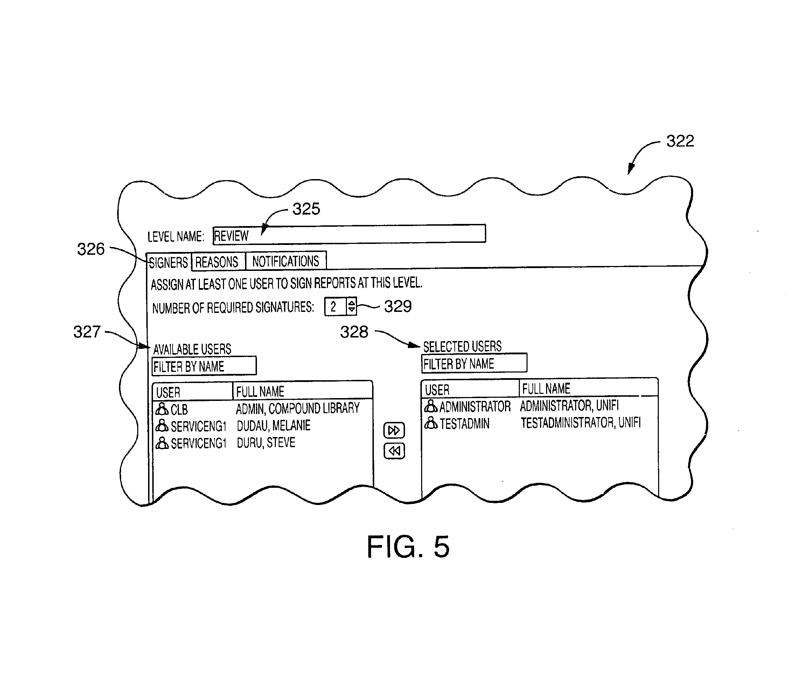

The Assignment area 322 includes tabs for assigning Signers, Reasons, and Notifications to a selected one of the levels of the signature method being edited. The name of the selected level is displayed in a Level Name region 325 in the Assignment area 322. Referring to FIG. 5, when the Signers tab 326 is selected, a list of available users (signers) 327 and a list of selected users 328 are displayed below the Level Name region 325. For each defined level, the authorized user is able to select end users from the list of available users 327. The list of available users 327 shows only users with permission to apply electronic signatures. There is also an option 329 to define a number of signatures that are required to complete the selected level.

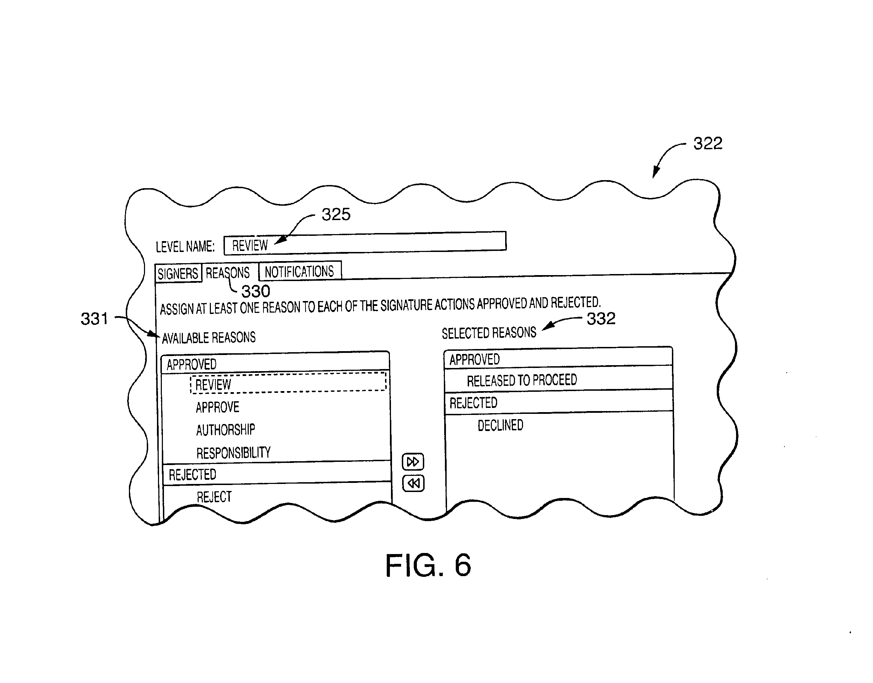

Referring to FIG 6, when the Reasons tab 330 is selected, a list of available reasons 331 and a list of selected reasons 332 are displayed below the Level Name region 325. The authorized user can assign one of the predefined reasons listed in the list of available reasons 331 to each defined level. When a signature sequence is started based on this defined signature method, only those assigned reasons are shown to the end user as available options when the end user is going to electrically sign a report.

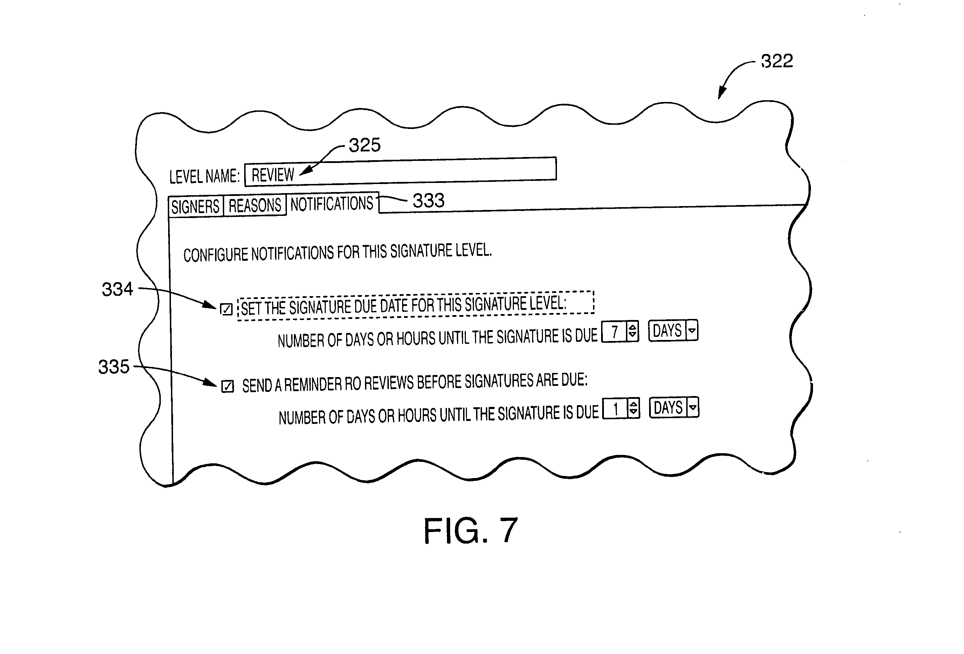

Referring to FIG. 7, when the Notifications tab 333 is selected, the authorized user is presented with a due date option 334 and a reminder option 335. The due date option 334 allows the authorized user to set a signature due date for the selected level. The authorized user can set the number of days or hours until a required signature is due. The reminder option 335 allows the authorized to send a reminder to reviewers a predetermined time (e.g., a number of days or hours) before signatures are due for the selected level. This definition triggers an automated distribution of notification to the signers when the due date is near or is reached.

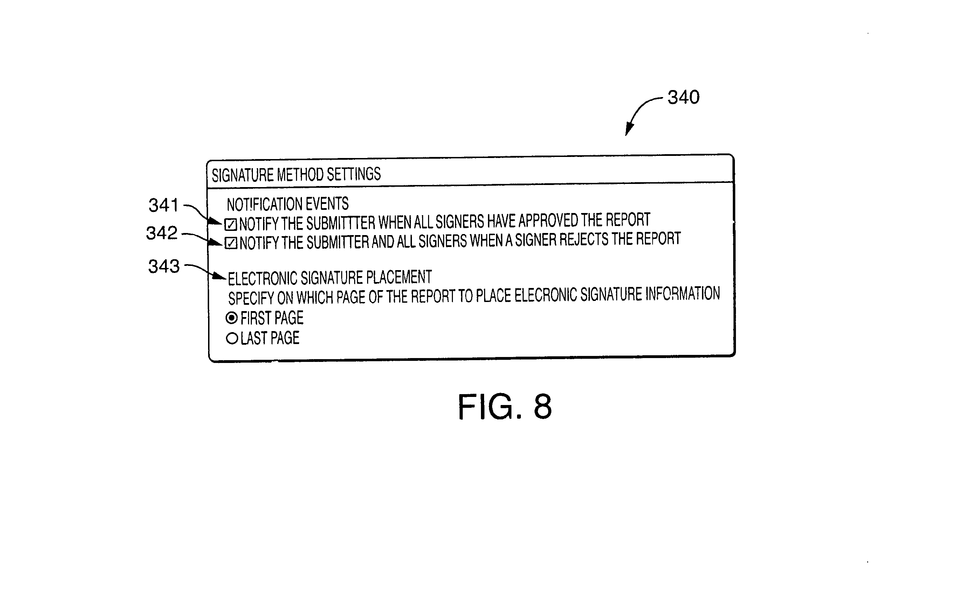

Referring to FIG. 8, the authorized user is also able to activate notification settings 341 for the overall signature method through the Signature Method Settings pane 340. These notification settings for the overall signature method trigger an automated distribution of notification to the submitter of a report when the report is completely signed. Additionally, if an end user rejects a report, there is an option 342 to distribute a notification to each of the signers of that report.

Since signatures are an integral part of a report, a signature page is created for each report. In this regard, the Signature Method Settings pane 340 also provides an option 343 to define where the signature page will be located (e.g., first or last page) in the corresponding report.

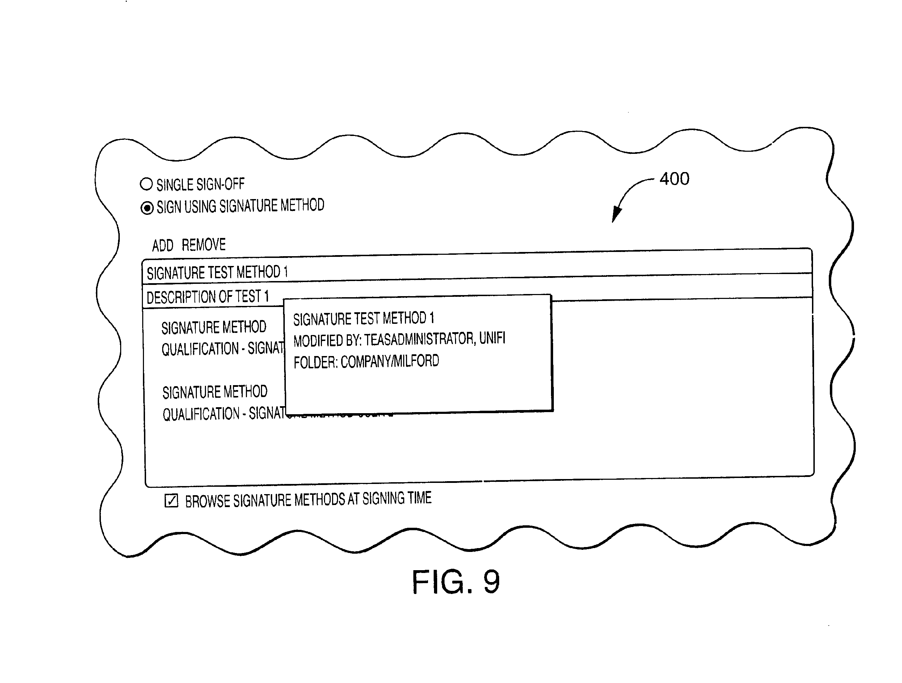

As mentioned above, the defined signature methods may exist as separate entities (e.g., stored within the database 40, FIG. 1) that can be assigned to other methods such as analysis methods or capture methods. It is also possible to assign multiple signature methods, e.g., to an analysis method. At runtime (i.e., when a report has to be signed) the graphical user interface 70 can present the end user with a list 400 of available signature methods, as illustrated in FIG. 9, so that the user can pick an appropriate one of the signature methods. It is also possible to assign multiple signature methods to another method, e.g., to an analysis method or capture method.

Although a few implementations have been described in detail above, other implementations are within the scope of the following claims.

## Claims

1. A computer-implemented method, comprising:
providing an authorized user with an option to define one more levels of a signature method, and
providing the authorized user with an option to assign at least one user whose signature is required for each of the defined levels.

2. The method of claim 1, wherein providing the authorized user with the option to define one or more levels comprising displaying the option to define one or more levels in a graphical user interface.

3. The method of claim 1 or claim 2, in particular of claim 1, wherein providing the authorized user with the option to assign at least one user whose signature is required for each of the defined levels comprises displaying the option to assign at least one user whose signature is required for each of the defined levels in a graphical user interface.

4. The method of any one of claims 1 to 3, in particular of claim 3, wherein displaying the option to assign at least one user whose signature is required for each of the defined levels comprises displaying a list of available users.

5. The method of any one of claims 1 to 4, in particular of claim 4, wherein the list of available users includes only users with permission to apply electronic signatures.

6. The method of any one of claims 1 to 5, in particular of claim 1, further comprising providing the authorized user with an option to assign at least one reason, from a list of predefined reasons, to each of an approved signature action and a rejected signature action.

7. The method of any one of claims 1 to 6, in particular of claim 1, further comprising providing the authorized user with an option to activate notification settings based on due dates, wherein the notification settings trigger an automated distribution of notification to selected users when a due date for signature is near or is reached.

8. The method of any one of claims 1 to 7, in particular of claim 7, wherein providing the authorized user with the option to activate notification settings based on due dates comprises displaying the option to activate notification settings based on due dates in a graphical user interface.

9. The method of any one of claims 1 to 8, in particular of claim 1, further comprising providing the authorized user with an option to activate notification settings for the overall signature method, wherein the notification settings trigger an automated distribution of notification to selected users when a report is completely signed.

10. The method of any one of claims 1 to 9, in particular of claim 1, further comprising providing the authorized user with an option to activate notification settings for the overall signature method, wherein the notification settings trigger an automated distribution of notification to selected users when one of the selected users rejects a report.

11. The method of any one of claims 1 to 10, in particular of claim 1, further comprising providing an end user with an option to assign the signature method to an other method.

12. The method of any one of claims 1 to 11, in particular of claim 11, wherein the other method is an analysis method or a capture method.
